# EUROPEAN PATENT APPLICATION

(11) **EP 2 228 725 A1**
(43) Date of publication of application: **15.09.2010**
(21) Application number: 09003707.8
(22) Date of filing: 13.03.2009
(51) Int. Cl.: G06F 11/20

(54) **Motherboard with backup chipset**

(71) Applicant: Giga-Byte Technology Co., Ltd., Taipei County (TW)
(72) Inventor: Lin, Hou-Yuan, Taipei 231 (TW); Chen, Chen-Shun, Taipei 231 (TW); Liao, Tse-Hsine, Taipei 231 (TW)
(74) Representative: Brandenburger, Karin

(57) **Abstract**

A motherboard includes a first chipset, a second chipset, a central processing unit (CPU), a low-speed bus, a first switch circuit and a second switch circuit. In a normal setup, the first switch circuit is coupled to the first chipset and the CPU, and the second switch circuit is coupled to the first chipset and the low-speed bus. In a backup setup, the first switch circuit is coupled to the second chipset and the CPU, and the second switch circuit is coupled to the second chipset and the low-speed bus. The motherboard of the present invention further comprises a switch-circuit control unit or a driver configured for switching the first and second switch circuits to be in the backup setup when the first chipset is damaged in the normal setup.

## Description

### BACKGROUND

### 1. Field of the Invention

The present invention relates to a motherboard, and more particularly to a motherboard with at least one backup chipset.

### 2. Description of the Related Art

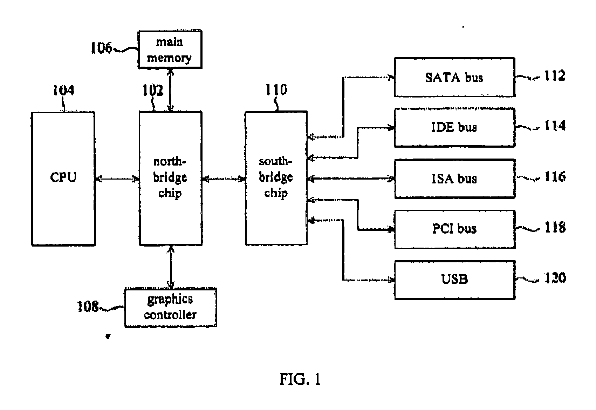

A conventional chipset of a motherboard generally includes a north-bridge chip and a south-bridge chip. FIG. 1 illustrates an application of the conventional chipset. The north-bridge chip 102 is configured for communicating a central processing unit (CPU) 104 with high-speed devices. The high-speed devices may include a main memory 106 or a graphics controller 108, etc. The south-bridge chip 110 is configured for being connected low-speed buses. The low-speed buses are used for external devices, and may include a Serial Advanced Technology Attachment (SATA) bus 112, an Integrated Device Electronics (IDE) bus 114, an Industrial Standard Architecture (ISA) bus 116, a Peripheral Component Interconnect (PCI) bus 118, or an Universal Serial Bus (USB) 120, etc.

With the rapid development of the semiconductor technology, the chipset is not limited to be manufactured including the south-bridge and north-bridge chips as shown in FIG. 1. The conventional chipset technology not only integrates the south-bridge and north-bridge technologies into a single chip, but also has an onboard chipset applying the graphics control technology, the USB interface, the Ethernet and the audio technology.

If the chipset become more complex, the chipset is easier to be damaged and should be frequently repaired. Once the chipset is damaged, the whole motherboard has to be repaired. It will consume more resources of manufacturers and spend more time of customers.

### BRIEF SUMMARY

The present invention relates to a motherboard with at least one backup chipset.

A motherboard in accordance with an exemplary embodiment of the present invention includes a first chipset, a second chipset, a central processing unit (CPU), a low-speed bus, a first switch circuit, a second switch circuit and a switch-circuit control unit.

The first switch circuit is configured for coupling the first chipset or the second chipset to the CPU. The second switch circuit is configured for coupling the first chipset or the second chipset to the low-speed bus.

In a normal setup, the first and second switch circuits couple the first chipset to the CPU and the low-speed bus. In a backup setup, the first and second switch circuits couple the second chipset instead of the first chipset to the CPU and the low-speed bus.

The switch-circuit control unit has a counter. The switch-circuit control unit switches the first and second switch circuits to be in the backup setup from the normal setup when the first chipset is not normally powered according to a power-on signal, a counting result of the counter and a state of the first chipset.

Compared with the above exemplary embodiment of employing the switch-circuit control unit to switch the first and second switch circuits, the motherboard of the present invention can employ a drive to control the first and second switch circuits in other exemplary embodiments. The driver will operate according to states of the low-speed bus and the first chipset.

For better understanding these and other objects, features and advantages of the present invention, the following will enumerate a plurality of exemplary embodiments cooperating with figures to describe the present invention in detail.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a block diagram of a conventional chipset.

FIG. 2 is a block diagram of a motherboard in accordance with an exemplary embodiment of the present invention.

### DETAILED DESCRIPTION

Reference will now be made to the drawings to describe exemplary embodiments of the present motherboard, in detail. The following description is given by way of example, and not limitation.

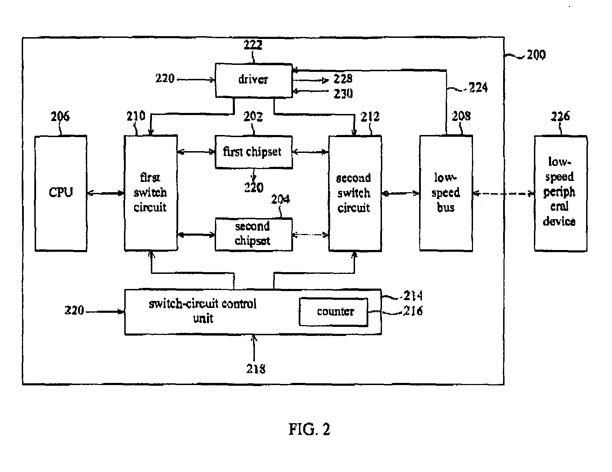

FIG. 2 illustrates a motherboard in accordance with an exemplary embodiment of the present invention. The motherboard 200 includes a first chipset 202, a second chipset 204, a central processing unit (CPU) 206, a low-speed bus 208, a first switch circuit 210, a second switch circuit 212 and a switch-circuit control unit 214.

The first switch circuit 210 is configured for coupling the first chipset 202 or the second chipset 204 to the CPU 206. The second switch circuit 212 is configured for coupling the first chipset 202 or the second chipset 204 to the low-speed bus 208.

The first and second switch circuits 210 and 212 have a normal setup, which couples the first chipset 202 to the CPU 206 and the low-speed bus 208. The first and second switch circuits 210 and 212 further have a backup setup, which couples the second chipset 204 instead of the first chipset 202 to the CPU 206 and the lolv-speed bus 208.

The switch-circuit control unit 214 has a counter 216. The switch-circuit control unit 214 switches the first and second switch circuits 210 and 212 according to a power-on signal 218, the counting result of the counter 216, and the state of the first chipset 202 (indicated by a signal 220). The following description is given as an example. A power-on command of users will touch off the power-on signal 218. In the normal setup, the motherboard 200 employs the first chipset 202 to perform a power-on program. The switch-circuit control unit 214 judges whether the first chipset 202 is normal according to the counting result of the counter 216 and the state (indicated by the signal 220) of the first chipset 202. If the first chipset 202 does not start to operate after a particular period of enabling the power-on signal 218, the first chipset 202 may be damaged. At the moment, the switch-circuit control unit 214 switches the first and second switch circuits 210 and 212 to be in the backup setup from the normal setup, such that the second chipset 204 substitutes the first chipset 202 to perform the function thereof. Therefore, even if the first chipset 202 is damaged, the motherboard 200 can also employ the second chipset 204 to perform the normal function thereof without any repair.

The motherboard of the present invention may further have other exemplary embodiments. Referring to FIG. 2, the motherboard 200 may further include a driver 222.

The driver 222 may be configured for switching the first and second switch circuits 210 and 212 according to the states of the low-speed bus 208 and the first chipset 202 (indicated by the signals 224 and 220 respectively). For example, the first chipset 202 can be powered on normally, but the function of the first chipset 202 relating to the low-speed bus 208 is damaged. When powering on, the first and second switch circuit 210 and 212 operate in the normal setup, and the first chipset 202 performs a power-on operation. According to the signals 224 and 220, the driver 222 will detect that the first chipset 202 is damaged when the low-speed bus 208 is connected to a low-speed peripheral device 226 and the first chipset 202 is not in response to the low-speed peripheral device 226. The driver 222 switches the first and second switch circuits 210 and 212 to be in the backup setup, such that the second chipset 204 instead of the first chipset 202 performs the function thereof.

The driver 222 may have other applications in accordance with other exemplary embodiments. The driver 222 can send out a warning message 228 when the first and second switch circuits 210 and 212 are in the normal setup, the low-speed bus 208 is coupled to the low-speed peripheral device 226 and the first chipset 202 is not in response to the low-speed peripheral device 226. The driver 222 will control the first and second switch circuits 210 and 212 according to a response (a signal 230) of users in response to the warning message 228. The warning message 228 may be a text message or other types. If the users determine to substitute the second chipset 204 for the first chipset 202, the driver 222 switches the first and second switch circuits 210 and 212 to be in the backup setup. If the users determine to disable the low-speed bus 208 and also employ the first chipset 202 to be communicated with other blocks of the motherboard 200, the driver 222 keeps the states of the first and second switch circuits 210 and 212.

In other exemplary embodiments of the present invention, the first and second switch circuits 210 and 212 can always operate in the backup state after detecting the first chipset 202 is damaged. Thereafter, the motherboard 200 employs the second chipset 204 to substitute the first chipset 202.

The motherboard of the present invention may have other applications in accordance with other exemplary embodiments, For example, the motherboard may only have the driver (the element 222 as shown in FIG. 2) and do not have the switch-circuit control unit (the element 214 as shown in FIG. 2).

The exemplary embodiment illustrated by FIG. 2 is not used to limit the amount of the low-speed bus of the motherboard of the present invention. In other exemplary embodiments, the motherboard of the present invention further includes a plurality of low-speed buses. The low-speed buses are coupled to the first chipset or the second chipset of the present invention via the second switch circuit of the present invention.

The exemplary embodiment illustrated by FIG. 2 is not used to limit the amount of the chipsets of the motherboard of the present invention. Except for the first chipset used in the normal setup, the motherboard of the present invention may further have at least two backup chipsets in other exemplary embodiments. The damaged chipset can be substituted by one of idle chipsets.

The chipsets of the present invention are not limited to be integrated in the motherboard by the onboard mode. The present invention may integrate the chipset in the motherboard by other modes (such as an insertion mode, etc.). For example, all of the chipsets of the motherboard of the present invention can be integrated by the onboard mode, or by the insertion mode. Alternatively, some of the chipsets can be integrated by the onboard mode and the other thereof can be integrated by the insertion mode.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

**1.** A motherboard with at least one backup chipset, comprising:
a first chipset;
a second chipset;
a central processing unit (CPU);
a low-speed bus;
a first switch circuit configured for coupling one of the first chipset and the second chipset to the CPU;
a second switch circuit configured for coupling one of the first chipset and the second chipset to the low-speed bus; and
a switch-circuit control unit having a counter, the switch-circuit control unit being configured for switching the first and second switch circuits to be in a backup setup from a normal setup according to a power-on signal, a counting result of the counter and a state of the first chipset;
wherein the first and second switch circuits couple the first chipset to the CPU and the low-speed bus in the normal setup, and the first and second switch circuits couple the second chipset to the CPU and the low-speed bus in the backup setup.

**2.** The motherboard as claimed in claim 1, wherein the switch-circuit control unit switches the first and second switch circuits to be in the backup setup from the normal setup when the counting result of the counter indicates the first chipset does not start to operate after a particular period of enabling the power-on signal.

**3.** The motherboard as claimed in claim 2, further comprising a driver configured for switching the first and second switch circuits to be in the backup setup from the normal setup according to states of the low-speed bus and the first chipset.

**4.** The motherboard as claimed in claim 3, wherein the driver switches the first and second switch circuits to be in the backup setup when the first and second switch circuits are in the normal setup, the low-speed bus is coupled to a low-speed peripheral device and the first chipset is not in response to the low-speed peripheral device.

**5.** The motherboard as claimed in claim 2, further comprising a driver, wherein the driver sends out a warning message when the first and second switch circuits are in the normal setup, the low-speed bus is coupled to a low-speed peripheral device and the first chipset is not in response to the low-speed peripheral device.

**6.** The motherboard as claimed in claim 5, wherein the driver controls the first and second switch circuits according to a response of users in response to the warning message.

**7.** A motherboard with at least one backup chipset, comprising:
a first chipset;
a second chipset;
a central processing unit (CPU);
a low-speed bus;
a first switch circuit configured for coupling one of the first chipset and the second chipset to the CPU;
a second switch circuit configured for coupling one of the first chipset and the second chipset to the low-speed bus; and
a driver configured for switching the first and second switch circuits to be in a backup setup from a normal setup according to states of the low-speed bus and the first chipset,
wherein the first and second switch circuits couple the first chipset to the CPU and the low-speed bus in the normal setup, and the first and second switch circuits couple the second chipset to the CPU and the low-speed bus in the backup setup.

**8.** The motherboard as claimed in claim 7, wherein the driver switches the first and second switch circuits to be in the backup setup when the first and second switch circuits are in the normal setup, the low-speed bus is coupled to a low-speed peripheral device and the first chipset is not in response to the low-speed peripheral device.

**9.** A motherboard with at least one backup chipset, comprising:
a first chipset;
a second chipset;
a central processing unit (CPU);
a low-speed bus;
a first switch circuit configured for coupling one of the first chipset and the second chipset to the CPU;
a second switch circuit configured for coupling one of the chipset and the second chipset to the low-speed bus; and
a driver configured for sending out a warning message when the first and second switch circuits are in a normal setup, the low-speed bus is coupled to a low-speed peripheral device and the first chipset is not in response to the low-speed peripheral device,
wherein the first and second switch circuits couple the first chipset to the CPU and the low-speed bus in the normal setup.

**10.** The motherboard as claimed in claim 9, wherein the driver switches the first and second switch circuits to be in a backup setup, or disables the low-speed bus according to a response of users in response to the warning message.

**11.** The motherboard as claimed in claim 10, wherein the first and second switch circuits couple the second chipset to the CPU and the low-speed bus in the backup setup.
